## Europäisches Patentamt

## European Patent Office

## Office européen des brevets

(11) Veröffentlichungsnummer: **0 258 583**
**A2**

(12) **EUROPÄISCHE PATENTANMELDUNG**

(21) Anmeldenummer: 87110132.5

(22) Anmeldetag: 14.07.87

(51) Int. Cl.⁴: **B65D 25/14** , B65D 8/04

(30) Priorität: 05.09.86 DE 3630274

(43) Veröffentlichungstag der Anmeldung:
09.03.88 Patentblatt 88/10

(84) Benannte Vertragsstaaten:
BE DE ES FR GB IT NL SE

(71) Anmelder: Krupp Koppers GmbH
Altendorfer Strasse 120
D-4300 Essen 1(DE)

(72) Erfinder: Fuckert, Karl O.
Schliepersberg 20
D-4300 Essen(DE)
Erfinder: Svoboda, Karel
106 Maple Street
Summit 07901 NJ(US)

(54) **Mit einer Innenauskleidung versehener Behälter.**

(57) Die Erfindung betrifft einen mit einer Innenauskleidung versehenen Behälter aus Leichtmetall, bei
dem die Innenseite der Behälterwand ganz oder
teilweise mit einer Lage aus Streckmetall oder Maschendraht ausgekleidet ist, auf die eine Schicht aus
Kunstharzkitt angetragen wird. Die Teile der Innenseite der Behälterwand, die nicht mit einer Lage aus
Streckmetall oder Maschendraht sowie einer
Kunstharzschicht ausgekleidet sind, können gegebenfalls durch eine Kunststoffschürze geschützt werden.

## Mit einer Innenauskleidung versehener Behälter.

Die Erfindung betrifft einen mit einer Innenauskleidung versehenen Behälter aus Leichtmetall.

Behälter aus Leichtmetall, das heißt insbesondere aus Aluminium und/oder Magnesium sowie deren Legierungen, werden aus Korrosionsgründen vorallem dort eingesetzt, wo sich die im Behälter befindlichen gasförmigen und flussigen Medien durch eine gewisse chemische Aggressivität auszeichnen. Die Oberfläche des verwendeten metallischen Werkstoffes wird dabei mit einer sogenannten Passivierungsschicht versehen, durch die der metallische Werkstoff gegen den chemischen Angriff der im Behälter befindlichen gasförmigen oder flüssigen Medien geschützt werden soll.

Sofern sich jedoch im Behälter dem jeweiligen Verwendungszweck angepaßte Einbauten, wie z. B. Füllkörper, Gasverteilungsböden oder dergleichen befinden, können in der Gasphase Wirbel entstehen, die zusammen mit den mitgerissenen Flüssigkeitstropfen zu einem allmählichen Abtrag der Passivierungsschicht führen, da die hierbei verwendeten metallischen Werkstoffe nur eine geringe Härte aufweisen. Danach ist der metallische Werkstoff dem chemischen Angriff der Medien ungeschützt ausgesetzt. Um dies zu verhindern, muß der Behälter in diesem Falle mit einem ausreichenden Innenschutz versehen werden.

Bisher war es hierfür üblich, den Behälter an seiner Innenseite mit einer Ausmauerung aus säurefesten Steinen zu versehen. Diese Ausgestaltung des Innenschutzes ist jedoch nicht frei von Nachteilen. Einerseits ist die Anbringung einer Ausnauerung auf geometrisch kompliziert gestalteten Teilen des Behälters, wie z.B. Krümmungen oder Rohrflanschen, schwierig und erfordert eine Vielzahl spezieller Steinformen. Andererseits wird durch die Ausmauerung der Innendurchmesser des Behälters nicht unbeträchtlich verringert, was automatisch zu einer entsprechenden Verringerung des Durchsatzes führt.

Der Erfindung liegt deshalb die Aufgabe zugrunde, den Behälter der eingangs genannten Art bezüglich seiner Innenauskleidung dahingehend zu verbessern, daß die vorstehend geschilderten Nachteile vermieden werden, wobei die Innenauskleidung gleichzeitig in möglichst einfacher und kostengünstiger Weise hergestellt werden soll.

Der der Lösung dieser Aufgabe dienende Behälter ist erfindungsgemäß dadurch gekennzeichnet, daß die Innenseite der Behälterwand ganz oder teilweise mit einer Lage aus Streckmetall oder Maschendraht ausgekleidet ist, auf die eine Schicht aus Kunstharzkitt aufgetragen wird.

Das heißt, die aus einer Lage aus Streckmetall oder Maschendraht sowie einer Kunstharzschicht bestehende Innenauskleidung kann sowohl auf der gesamten Innenseite der Behälterwand als auch auf Teilen hiervon aufgebracht werden. Beispielsweise genügt es in manchen Fällen, wenn nur besonders erosionsgefährdete Bereiche mit dieser Innenauskleidung versehen werden.

Gemäß einer bevorzugten Ausführungsform der Erfindung werden die Teile der Innenseite der Behälterwand, die nicht mit einer Lage aus Streckmetall oder Maschendraht sowie einer Kunstharzschicht ausgekleidet sind, durch eine Kunststoffschürze geschutzt. Die Kunststoffschürze ist dabei insbesondere zur Auskleidung geometrisch einfacher Bereiche des Behälters, wie z.B. des zylindrischen Teiles, geeignet.

Die erfindungsgemäße Innenauskleidung weist dabei insgesamt geshen eine wesentlich geringere Dicke auf, als dies bei einer Innenausmauerung der Fall ist. Normalerweise liegt die Dicke der erfindungsgemäßen Innenauskleidung im Bereich zwischen ca. 2 und 3 cm. Die dadurch bedingte Verringerung des Innendurchmessers des Behälters ist so klein, daß sie keine ins Gewicht fallende Verringerung des Durchsatzes bewirkt.

Fur die erfindungsgemäße Innenauskleidung können vorzugsweise folgende Materialien zur Anwendung gelangen: Streckmetall aus Aluminium, säurefester Kunstharzkitt auf Phenolharzbasis sowie Polyethylen oder Polypropylen für die Kunststoffschürze.

Sofern hierbei in der Schicht aus Kunstharzkitt feine Haarrisse entstehen, ist dies absolut unschädlich, da der Korrosionsschutz ja durch die Passivierungsschicht des Leichtmetalles übernommen und das Streckmetall an der Behälterwand nur punktweise angeschweist wird. Die Erfindung führt deshalb dazu, daß Behälter aus Leichtmetall überall dort eingesetzt werden können, wo bisher ein wirksamer Erosions schutz aus fertigungstechnischen Gründen unmöglich oder sehr umständlich war. Typische Anwendungsfälle für den erfindungsgemäßen Behälter sind hierbei gegeben bei den Entsäurern und Abtreibern von Koksofengasbehandlungsanlagen, bei Kolonnen und Behältern von Schwefelsäureanlagen sowie anderen Anlagen, bei denen chemisch aggressive Medien zum Einsatz gelangen, wie z.B. den sogenannten Starkwasseranlagen in der Kokerei.

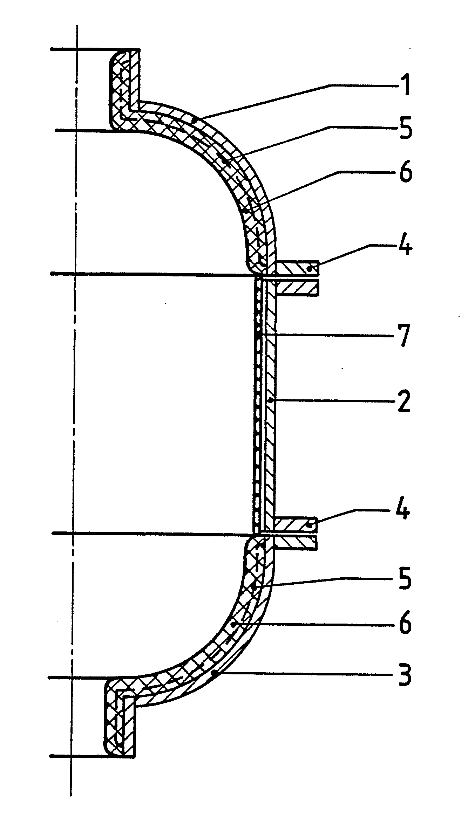

Weitere Einzelheiten des erfindungsgemäßen Behälters sollen nachfolgend an Hand der Abbildung erläutert werden. Diese zeigt einen Schnitt durch die eine Hälfte des Behälters. Hierbei ist nur die rechts der Symmetrieachse liegende Behälterhälfte dargestellt. Die links der Symmetrieachse liegende Behälterhälfte entspricht dabei jedoch der abgebildeten rechten Hälfte, so daß auf ihre Darstellung verzichtet werden kann. In der Abbildung ist außerdem nur der nackte Behälter ohne jegliche Einbauten und Armaturen dargestellt. Bei diesen Einbauten und Armaturen handelt es sich um für den jeweiligen Verwendungszweck bekannte und gebräuchliche Einrichtungen. Da diese jedoch nicht Gegenstand der Erfindung sind, braucht auf sie auch nicht näher eingegangen zu werden. Schließlich muß noch darauf hingewiesen werden, daß die Erfindung nicht an die in der Abbildung dargestellte Form des Behälters gebunden ist. Es können vielmehr auch Behälter mit anderer Formgebung zur Anwendung gelangen.

Der in der Abbildung dargestellte Behälter besteht aus einem oberen Teil 1, einem mittleren Teil 2 und einem unteren Teil 3, die durch die Flansche 4 miteinander verbunden sind. Der obere Teil 1 und der untere Teil 3 sind dabei jeweils mit einer Lage aus Streckmetall (Aluminium) 5 ausgekleidet, auf die eine Schicht aus Kunstharzkitt 6 aufgetragen worden ist. Die Lage aus Streckmetall 5 wird dabei durch Punktschweißen an der Innenseite der Behälterwand befestigt und gibt ihrerseits der Schicht aus Kunstharzkitt 6 den erforderlichen Halt. Diese kann entweder durch Aufstreichen bzw. -spachteln oder durch Aufspritzen auf die Lage aus Streckmetall 5 aufgebracht werden. Bei dem in der Abbildung dargestellten Behälter ist der mittlere Teil 2, der eine geometrisch einfache Formgebung (Zylinder) aufweist, mit einer Kunststoffschürze 7 ausgekleidet. Diese Kunststoffschürze 7 ist in ihrer Formgebung und Abmessung dem mittleren Teil 2 genau angepaßt und wird lose in den Behälter eingebracht.

## Ansprüche

1. Mit einer Innenauskleidung versehener Behälter aus Leichtmetall, dadurch gekennzeichnet, daß die Innenseite der Behälterwand ganz oder teilweise mit einer Lage aus Streckmetall oder Maschendraht ausgeklidet ist, auf die eine Schicht aus Kunstharzkitt aufgetragen wird.

2. Behälter nach Anspruch 1, dadurch gekennzeichnet, daß die Teile der Innenseite der Behälterwand, die nicht mit einer Lage aus Streckmetall oder Maschendraht sowie einer Kunstharzkittschicht ausgekleidet sind, durch eine Kunststoffschürze geschützt werden.

3. Behälter nach den Anspruchen 1 und 2, dadurch gekennzeichnet, daß die Kunststoffschürze insbesondere zur Auskleidung geometrisch einfacher Bereiche des Behälters verwendet wird.

4. Behälter nach den Ansprüchen 1 bis 3, dadurch gekennzeichnet, daß als Streckmetall Aluminium verwendet wird.

5. Behälter nach den Ansprüchen 1 bis 4, dadurch gekennzeichnet, daß die Kunstharzkittschicht aus einem säurefesten Kunstharzkitt auf Phenolharzbasis besteht.

6. Behälter nach den Ansprüchen 1 bis 5, dadurch gekennzeichnet, daß die Kunststoffschürze aus Polyethylen oder Polyprophylen besteht.